Europäisches Patentamt

European Patent Office

Office européen des brevets

(11) Publication number: **0 067 047**
**A1**

## EUROPEAN PATENT APPLICATION

(21) Application number: 82302878.2

(22) Date of filing: 03.06.82

(51) Int. Cl.³: **B 65 G 59/04**

(30) Priority: 04.06.81 JP 84962/81

(43) Date of publication of application: 15.12.82
Bulletin 82/50

(84) Designated Contracting States: DE FR GB IT

(71) Applicant: Fanuc Ltd, 5-1, Asahigaoka, 3-chome, Hino-shi, Tokyo 191 (JP)

(72) Inventor: Nakajima, Seiichiro, 7789-17, Hino, Hino-shi Tokyo (JP)
Inventor: Torii, Nobutoshi, Fuyo-haitsu 308 65-4, Takakura-cho, Hachioji-shi Tokyo (JP)

(74) Representative: Allman, Peter John et al, Marks and Clerk Scottish Life House Bridge Street, Manchester M3 3DP (GB)

(54) **Part-feeding device.**

(57) A part-feeding device for separating a plurality of laminated magnetic parts (1) one by one and feeding the uppermost part thereof comprises an electromagnet (8) for generating a magnetic field so as to create a repulsive force between the parts (1) and a pickup (9) for picking up the uppermost part.

EP 0 067 047 A1

- 1 -

## PART-FEEDING DEVICE

The present invention relates to a part-feeding device used for, for example, an assembling robot system.

In an assembling robot system, a part-feeding device has been used for holding a large number of relatively small and thin parts, such as wave-washers, which are laminated in an up and down motion. In this part-feeding device, the uppermost parts are separated one by one from the other parts and are fed to the robot. Such separation of the parts one by one is performed by an air suction means which is, for example, provided in a hand of the robot.

In the above-mentioned part-feeding device, however, two or more parts are picked up simultaneously due to the presence of oil, dust, or the like between the parts.

It is, therefore, a principal object of the present invention to provide a part-feeding device in which two or more parts are prevented from being picked up simultaneously.

According to the present invention, there is provided a part-feeding device for separating a plurality of laminated magnetic parts one by one and feeding the uppermost magnetic part thereof, comprising: means for generating a magnetic field to the magnetic parts so as to generate a repulsive force between the magnetic parts; and a pickup means for picking up the uppermost magnetic part magnetized by the magnetic field-generating means.

The present invention will be more clearly understood from the description as set forth below with reference to the accompanying drawings, wherein:

Figure 1 is a longitudinal cross-sectional view illustrating a first embodiment of the part-feeding device according to the present invention;

Fig. 2 is a cross-sectional view taken along the line II-II of Fig. 1;

Fig. 3 is a partial view illustrating the operation of the device of Fig. 1; and

Fig. 4 is a longitudinal cross-sectional view illustrating a second embodiment of the part-feeding device according to the present invention.

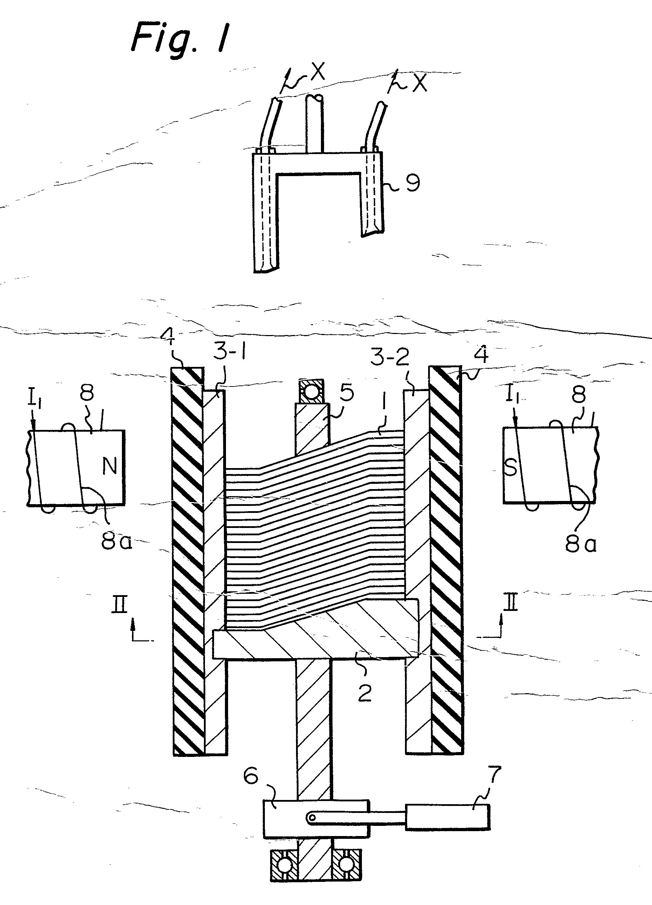

In Fig. 1, a large number of magnetic parts, such as wave-washers 1, are laminated in an up and down motion on a base 2. This base 2 moves up and down along two guiderails 3-1 and 3-2 on the inner surface of a nonmagnetic acryl resin cylinder 4 and a screw 5 located at the center of the cylinder 4. The up and down motion is performed by a ratchet wheel 6 fixed to the screw 5. This ratchet wheel 6 is rotated by an air cylinder 7 at a pitch of, for example, 90 degrees.

According to the present invention, an electromagnet 8 is provided for generating a magnetic field so as to create a repulsive force between the parts 1 and, accordingly, to separate the parts 1 from each other. Particularly, in this case, in view of gravitation, there is generated an air gap between the uppermost magnetic part and the magnetic part immediately beneath it.

A pickup 9 for picking up the uppermost part is provided with a hand of a robot (not shown). In this case, the pickup 9 is comprised of an air suction means.

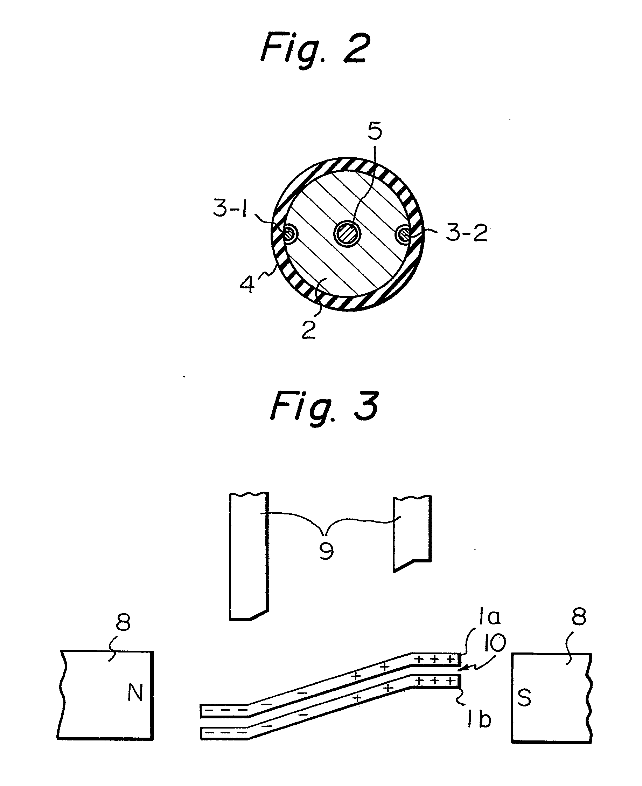

As will be understood from Fig. 2, even if the base 2 is moved up and down by rotating the screw 5, the base 2 itself does not rotate and, accordingly, the magnetic parts 1 do not rotate.

Returning to Fig. 1, the operation of the device of Fig. 1 will now be explained with reference to Fig. 3. When a current $I_1$ is supplied to a coil 8a of the electromagnet 8, the electromagnet 8 generates a magnetic field to the magnetic parts 1. As a result, as illustrated in Fig. 3, the magnetic poles of the uppermost magnetic part 1a and the magnetic part 1b immediately beneath the part 1a are both S-poles near the N-pole of the electromagnet 8 and are both N-poles near the S-pole of the electromagnet 8. Therefore, a repulsive force is generated between the parts 1a and 1b so as to create an air gap 10.

Next, the pickup 9 descends to suck up only the uppermost magnetic part 1a (Fig. 3). In this case, air flows as indicated by the arrows X (Fig. 1). Then the pickup 9 holding the part 1a is moved to a working table (not shown) of the robot system and, accordingly, the part 1a is mounted on the working table.

In this case, it is assumed that each part 1 (Fig. 1) is 0.25 mm in thickness and the screw 5 generates a 1 mm lead per one rotation. Then when the air cylinder 7 is operated by one stroke, the screw 5 rotates 90 degrees and, accordingly, the base 2 feeds up at a distance equal to the thickness of one magnetic part 1. After that, the pickup 9 sucks up the second part 1b.

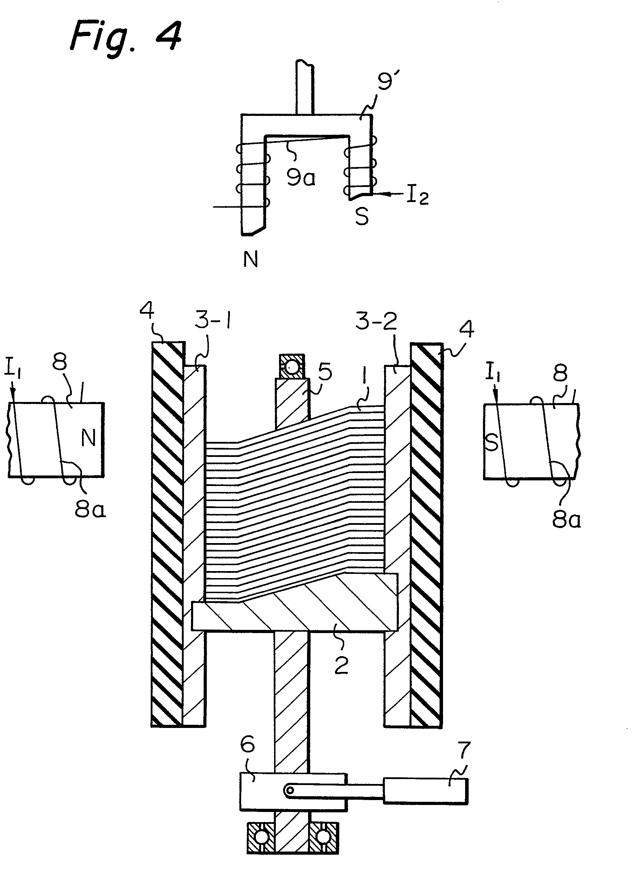

In Fig. 4, a pickup 9' comprised of a magnetic field-generating means (electromagnet) is provided instead of the pickup 9 of Fig. 1 comprised of an air suction means. However, the operation of the pickup 9' is similar to that of the pickup 9. In Fig. 4, when the pickup 9' descends and a current $I_2$ is supplied to a coil 9a of the pickup 9', the magnetic force induced by the pickup 9' is small as compared with the magnetic force (repulsive magnetic force) between the parts induced by the electromagnet 8. Therefore, even in this case, the pickup 9' picks up only the uppermost part.

As explained hereinbefore, the part-feeding device according to the present invention is advantageous in that the feeding of two or more magnetic parts simultaneously does not occur since the laminated magnetic parts are definitely separated one by one by the magnetic field-generating means (the electromagnet 8).

CLAIMS

1. A part-feeding device for separating a plurality of laminated magnetic parts (1) one by one and feeding the uppermost magnetic part (1a) thereof, comprising:

means (8) for generating a magnetic field to said magnetic parts so as to generate a repulsive force between said magnetic parts; and

a pickup means (9, 9') for picking up the uppermost magnetic part magnetized by said magnetic field-generating means.

2. A device as set forth in claim 1, wherein said pickup means comprises an air suction means (9).

3. A device as set forth in claim 1, wherein said pickup means comprises another means (9') for generating a magnetic field so as to generate an attractive force between the uppermost magnetic part and said another magnetic field-generating means.

4. A device as set forth in claim 1, further comprising means (2∿7) for pushing up said magnetic parts.

1

## Fig. 1

2

## Fig. 2

## Fig. 3

# Fig. 4

# 0067047

European Patent Office

**EUROPEAN SEARCH REPORT**

Application number

EP 82 30 2878.2

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | US – A – 4 024 963 (HAUTAU) <br> * column 2, lines 11 to 28; column 3, lines 28 to 38 * <br> -- | 1,2 | B 65 G 59/04 |
| X | US – A – 2 999 687 (HOMMEL) <br> * column 1, line 53 to column 2, line 46 * <br> -- | 1,2 | |
| X | DE – B – 2 103 954 (KELLER & KNAPPICH GMBH) <br> * column 3, line 36 to column 4, line 9 * <br> -- | 1,3,4 | **TECHNICAL FIELDS SEARCHED (Int.Cl. 3)** |
| X | DE – B – 1 266 687 (L. SCHULER GMBH) <br> * column 2, lines 37 to 52 * <br> ----- | 1 | B 21 D 43/00 <br> B 65 G 59/00 |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | |
|---|---|---|
| Place of search <br> Berlin | Date of completion of the search <br> 24-08-1982 | Examiner <br> SIMON |

EPO Form 1503.1 06.78